# EUROPÄISCHE PATENTSCHRIFT

(11) **EP 2 240 797 B1**
(45) Veröffentlichungstag und Bekanntmachung des Hinweises auf die Patenterteilung: **22.05.2013**
(21) Anmeldenummer: 09711373.2
(22) Anmeldetag: 03.02.2009
(51) Int. Cl.: G01S 17/10, G01S 17/36, G01S 7/484, G01S 7/491

(54) **OPTISCH-ELEKTRONISCHE ENTFERNUNGSMESSVORRICHTUNG**
OPTICAL-ELECTRONIC DISTANCE MEASURING DEVICE
DISPOSITIF DE MESURE DE DISTANCE OPTOÉLECTRONIQUE

(30) Priorität: 11.02.2008 CH 191082008
(43) Veröffentlichungstag der Anmeldung: 20.10.2010
(73) Patentinhaber: Leica Geosystems AG, 9435 Heerbrugg (CH)
(72) Erfinder: FORRER, Peter, 8582 Dozwil (CH); GIGER, Kurt, CH-9464 Rüthi (CH)
(74) Vertreter: Kaminski Harmann
(86) Internationale Anmeldenummer: PCT/EP2009/051191
(87) Internationale Veröffentlichungsnummer: WO 2009/101002

(56) Entgegenhaltungen:
- EP-A- 0 738 899
- WO-A-02/16964
- US-A1- 2004 135 992

## Beschreibung

Die Erfindung betrifft ein optisch-elektronisches Entfernungsmessverfahren nach dem Anspruch 1, eine optisch-elektronische Entfernungsmessvorrichtung nach dem Anspruch 16 und eine Empfangsschaltung dafür nach dem Anspruch 10.

Optisch-elektronische Entfernungsmessgeräte der gattungsgemässen Art sind aus dem Stand der Technik hinlänglich bekannt. Sie weisen einen Entfernungsmessbereich von einigen zehn Metern auf und sind oftmals als Handgeräte ausgebildet. Sie werden hauptsächlich in der Bauvermessung oder im Innenausbau, beispielsweise zum dreidimensionalen Vermessen von Räumen, eingesetzt. Weitere Anwendungsbereiche für Entfernungsmessgeräte sind die geodätische und die industrielle Vermessung. Das Grundprinzip der Entfernungsmessung mit den bekannten Geräten beruht auf der Auswertung einer zeitlichen Veränderung einer Kenngrösse der vom Gerät emittierten und von einem anvisierten Objekt reflektierten elektromagnetischen Strahlung. Das Entfernungsmessgerät ist dazu mit einem Sender zur Emission einer intensitätsmodulierten Strahlung ausgestattet. Bei Handgeräten handelt es sich dabei vornehmlich um eine optische Strahlung im sichtbaren Wellenlängenspektrum, um das Anvisieren der Messpunkte zu erleichtern. Die optische Strahlung wird von dem anvisierten Messobjekt reflektiert und von einem in das Gerät eingebauten Empfänger detektiert. Aus der zeitlichen Verzögerung der empfangenen Strahlung gegenüber der vom Sender emittierten Strahlung ergibt sich die Entfernung zum Messobjekt.

Als Detektoren kommen in den bekannten Entfernungsmessgeräten üblicherweise Pin-Photodioden oder Avalanche-Photodioden zur Wandlung der am Messobjekt reflektierten empfangenen Strahlung in elektrische Signale zum Einsatz. Sehr gebräuchlich sind Entfernungsmessgeräte, deren Entfernungsbestimmung auf dem Messprinzip der Phasenmessung beruht. Bei derartigen Geräten wird das elektrische Empfangssignal direkt an der Avalanche-Photodiode oder nach einem Vorverstärker mit einer Mischerfrequenz zu einem niederfrequenten Messsignal überlagert. Auf diesem niederfrequenten Signal wird die Phase bestimmt und mit der Phase eines Referenzsignals verglichen. Die Differenz der gemessenen Phase des niederfrequentent Messsignals zur Phase des Referenzsignals ist ein Mass für die Entfernung des Messobjekts.

In der EP-B-0 738 899 sind das Verhalten von Laserdioden für sichtbare Strahlung und die damit verbundenen Genauigkeitsprobleme bei der Entfernungsmessung beschrieben. Zur Verbesserung der Genauigkeit der Entfernungsmessung ist dort vorgeschlagen, die emittierte Laserstrahlung mit Pulsbreiten kleiner 2 ns zu modulieren. Die Modulationsfrequenz dieses bekannten Geräts liegt dabei im Bereich von etwa 50 MHz. Bei Pulsen einer Pulsbreite von beispielsweise 1 ns und einer Periodendauer von 20 ns ist bei diesen bekannten Geräten eine Pulsleistung von ca. 20 mW erforderlich, um eine mittlere Leistung von 1 mW zu erreichen, die im Allgemeinen eine genügende Augensicherheit gewährleistet. Die vorgeschlagene Modulationsart ist mit den handelsüblichen 3 mW Lasern noch umsetzbar, ohne durch die erhöhte Pulsleistung gegenüber dem kontinuierlichen 3 mW Betrieb grössere Einbussen in der Lebensdauer der Laser in Kauf nehmen zu müssen. Durch die kurzen Pulse und die hohe Pulsleistung wird eine kurze Kohärenzlänge der Laserstrahlung erzielt. Dies hat eine Reduktion der im Allgemeinen granulierten Intensitätsverteilung der von der meist rauen Oberfläche des anvisierten Messobjekts reflektierten Strahlung zur Folge. Die granulierte Intensitätsverteilung ist auch unter der Bezeichnung Speckles bekannt und beeinflusst die erreichbare Messgenauigkeit.

Die Veröffentlichung US 2004/0135992 A1 beschreibt eine Vorrichtung bzw. eine Methode mit welcher die Distanz zu einem entfernten Ziel sowie die Relativgeschwindigkeit zwischen dem entfernten Ziel und der Vorrichtung bestimmt werden kann. Dabei wird das vom Ziel reflektierte Licht nach dem Prinzip des ETS-Samplings abgetastet.

Die WO 02/16964 beschreibt ein Verfahren und eine Vorrichtung zur Entfernungsmessung, die auf der Phasenmessung einer von einem anvisierten Messobjekt reflektierten optischen Messstrahlung basieren. Dabei wird das Messobjekt mit einer von einem Messgerät emittierten, intensitätsmodulierten, optischen Messstrahlung beaufschlagt und ein am Messobjekt reflektierter Teil der Messstrahlung von einem im Messgerät angeordneten Empfänger detektiert und in elektrische Messsignale umgeformt. Die elektrischen Messsignale werden dann mit einem Referenzsignal verglichen, das aus der Detektion und Umformung eines durch eine bekannte Referenzstrecke geleiteten Messlichtanteils generiert wird, um aus einer Phasendifferenz den Abstand zwischen dem Messgerät und dem Messobjekt zu ermitteln. Dabei wird vorgeschlagen, die emittierte Messstrahlung burstmoduliert auszusenden und das Messsignal des Empfängers nur während einer von einer aktiven Burstdauer abhängigen Zeitspanne auszuwerten.

Die aktive Burstzeit ist dabei diejenige Zeitdauer, während der ein Burstsignal anliegt, wohingegen während einer Totzeit kein Signal an der Laserdiode als Sender anliegt. Die Periode der Abfolge von Bursts und Totzeit wird als Burst-Periodendauer bezeichnet. Das Burstsignal weist einen Duty Cycle auf, der als das Verhältnis der aktiven Burstzeit zur Burst-Periodendauer in % definiert ist. Dadurch unterscheidet sich die Burstmodulation von einer Pulsmodulation, bei der das Modulationssignal über die Gesamtdauer einer Messperiode quasi kontinuierlich anliegt. Bei der Burstmodulation hingegen liegt das Modulationssignal nur während eines Teils der Messperiode an, sodass nur während der aktiven Burstzeit eine Pulsfolge ausgesendet wird. Nach der oben angeführten Definition beträgt daher bei der Pulsmodulation der Duty Cycle immer 100 %, während der Wert bei der Burstmodulation immer kleiner als 100 % ist. Die Burstmodulation kann dabei beispielsweise mit einem rechteckmodulierten Burstsignal erfolgen.

Durch die Auswertung des Messsignals des Empfängers nur während der aktiven Burstdauer kann das Signal/RauschVerhältnis (S/N) verbessert werden. Dies kann an einem vereinfacht dargestellten Beispiel eines Lasers mit einer maximalen mittleren Ausgangsleistung von 1 mW erläutert werden. Wird anstelle der bei den bekannten Geräten ausgesandten Messstrahlung mit 2,5 mW Spitzenleistung ein Laserburst von 10 % Duty Cycle mit einer Spitzenleistung von 25 mW abgestrahlt, so erhält man wiederum eine mittlere Laserleistung von 1 mW. Indem das Empfangssignal nur während der aktiven Burstdauer ausgewertet wird, erhält man zwar das gleiche Gesamtsignal, das entstehen würde, wenn ein kontinuierliches Signal aufsummiert würde. Nachdem jedoch während 90 % der Periode keine Auswertung erfolgt, können auch 90 % des Rauschens unterdrückt werden. Daraus resultiert in diesem vereinfachten Beispiel eine Verbesserung des Signal/Rausch-Verhältnisses (S/N) um einen Faktor √(10), also Quadratwurzel(10).

Die Burstmodulation kann prinzipiell mit einer aktiven Burstdauer erfolgen, die sich nur auf einen einzigen Peak beschränkt. Zweckmässigerweise wird die aktive Burstdauer jedoch derart gewählt, dass sich daraus ein Duty Cycle ergibt, der etwa 5 % bis etwa 50 %, vorzugsweise etwa 10 % bis etwa 40 % beträgt.

Für den Effekt der Burstmodulation kann die emittierte Messstrahlung insbesondere mit einer Modulationsfrequenz grösser 100 MHz und einer Peakleistung grösser 10 mW moduliert werden. Die höheren Spitzenleistungen des Lasers bei der Burstmodulation verkürzen auch die Kohärenzlänge der emittierten Laserstrahlung, da der Laser bei gleicher Pulsbreite aber höherer Peakleistung durch mehrere Moden springt. Dies kann sich vorteilhaft auf die Genauigkeit der Messgeräte auswirken.

Des Weiteren kann die Burstmodulation auch zu einer Vereinfachung der Regelung der Laserleistung führen und eine Reduktion des Stromverbrauchs erlauben.

Die in der WO 02/16964 beschriebenen Entfernungsmessgeräte weisen einen Sender zur Emission einer burstmodulierten optischen Strahlung, eine Empfangsoptik für einen am Messobjekt reflektierten Teil der optischen Messstrahlung, einen der Empfangsoptik nachgeschalteten Empfänger zur Umwandlung der optischen Strahlung in elektrische Messsignale, eine Einrichtung zur Erzeugung einer Referenzstrahlung, die nach Durchlaufen einer bekannten Referenzstrecke in elektrische Referenzsignale umformbar ist, einer Filtereinrichtung zur Ausfilterung von Störsignalen sowie eine insbesondere digitale Signalverarbeitungsanlage zur Untersuchung der Messsignale und der Referenzsignale hinsichtlich ihrer Phasenlage - um daraus den Abstand des Messobjekts zu bestimmen und das Ergebnis dem Anwender verfügbar zu machen - auf. Dabei ist der Sender mit einem Frequenzsynthesizer verbunden, mit dem der emittierten optischen Strahlung eine nach dem Burstmodulationsprinzip erfolgende Intensitätsmodulation einprägbar ist. Empfängerseitig ist die Auswertung der elektrischen Mess- und Referenzsignale an die aktive Burstzeit gekoppelt.

Die optische Referenzstrahlung kann beispielsweise durch einen Strahlteiler erzeugt und nach dem Durchlaufen einer bekannten Referenzstrecke durch einen separaten Referenzempfänger detektiert und in elektrische Referenzsignale umformt werden. Die emittierte optische Messstrahlung kann aber auch periodisch entweder zum Messobjekt oder durch die Referenzstrecke zum Empfänger geleitet werden. Beispielsweise kann dazu ein periodisch in den Strahlengang einschwenkbarer Umlenkspiegel vorgesehen sein.

Für die Burstmodulation kann als Sender eine Halbleiterlaserdiode für sichtbare optische Strahlung eingesetzt werden, die beispielsweise eine Wellenlänge im Bereich von etwa 630 nm bis etwa 650 nm aufweist. Derartige Halbleiterlaserdioden sind mit den erforderlichen mittleren Ausgangsleistungen betreibbar und können insbesondere die benötigten Pulsenergien nahezu ohne Einbusse an Lebensdauer bereitstellen.

In dem in der WO 02/16964 beschriebenen Verfahren werden die elektrischen Messsignale durch kontinuierliche oder burstförmige Überlagerung einer hochfrequenten Mischerfrequenz in niederfrequente Signale umgeformt und nur während der aktiven Burstzeit gefiltert bzw. durch einen als Filter wirkenden Tranzimpedanzverstärker in eine Ausgangsspannung umgewandelt, sodass die niederfrequenten Signale in einer aus den jeweiligen Phasenlagen die Entfernung des Messobjekts bestimmenden Signalverarbeitungsanlage weiterverarbeitet werden können. Die Mischerfrequenz kann dabei beispielsweise dem Wert der Modulationsfrequenz des Burstsignals ± dem Frequenzwert des niederfrequenten Signals entsprechen. Die Ausfilterung eines Rauschens kann z.B. am analogen niederfrequenten Signal erfolgen und/oder nach einer Digitalisierung des Signals in der digitalen Signalverarbeitung durchgeführt werden.

Die aktive Burstzeit wird gemäss der WO 02/16964 mit Vorteil zu etwa eineinhalb Periodendauern des niederfrequenten Messsignals gewählt. Das erste Drittel der aktiven Burstzeit wird benötigt, damit das Filter einschwingen kann. Das Signal wird dann nur noch während der folgenden zwei Drittel der aktiven Burstzeit, die einer vollständigen Periode des niederfrequenten Messsignals entspricht, aufsummiert.

Dabei wirkt sich allerdings die verhältnismässig lange Dauer, die zum Einschwingen des Filters benötigt wird, als nachteilig heraus, da deshalb - gegenteilig zur eigentlichen Idee des Burstmodulationsprinzips - ebenso eine verhältnismässig lange aktive Burstzeit gewählt werden muss. Die durch die Burstmodulation eigentlich erzielbaren Vorteile - insbesondere hinsichtlich einer Verbesserung des Signal/Rausch-Verhältnisses (S/N) - sind somit durch die in der WO 02/16964 beschriebene Entfernungsmessvorrichtung nur bedingt realisierbar.

Eine Aufgabe der Erfindung ist daher das Bereitstellen einer - insbesondere hinsichtlich des Signal/Rausch-Verhältnisses - verbesserten Empfangsschaltung für eine Entfernungsmessvorrichtung, die zur Emission einer nach dem Burstmodulationsprinzip modulierten Messstrahlung ausgebildet ist.

Eine weitere Aufgabe der Erfindung ist das Bereitstellen eines verbesserten optisch-elektronischen Entfernungsmessverfahrens und einer verbesserten optisch-elektronischen Entfernungsmessvorrichtung.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Das erfindungsgemässe optisch-elektronische Entfernungsmessverfahren basiert auf dem Prinzip der Phasenmessung eines an einem Messobjekt reflektierten Teiles einer Messstrahlung. Dazu wird in Richtung des Messobjekts eine nach dem Burstmodulationsprinzip modulierte optische Messstrahlung ausgesendet.

Die Messstrahlung wird dabei in so genannten Bursts emittiert. Während jeweils einer aktiven Burstzeit, die die Breite der Bursts bestimmt, liegt dabei ein Modulationssignal an, sodass die Messstrahlung intensitätsmoduliert mit einer bestimmten Modulationsfrequenz ausgesendet wird. Hingegen liegt während einer Totzeit - jeweils zwischen den Bursts - kein Modulationssignal an. Eine Burst-Periodendauer wird als die Dauer für eine aktive Burstzeit und eine Totzeit definiert, sodass die Burst-Periodendauer beispielsweise den Abstand zwischen jeweils dem Beginn von zwei aufeinander folgenden Bursts angibt.

Mindestens ein am Messobjekt reflektierter Teil der ausgesendeten Messstrahlung wird wieder empfangen und in ein Eingangsmesssignal umgeformt.

Dabei erfolgt eine insbesondere kontinuierliche Überlagerung mit einer Mischerfrequenz derart, dass das Eingangsmesssignal im Wesentlichen Burst-Impulse konstanter Breite, die durch die aktive Burstzeit bestimmt wird, und modulierter Amplitude aufweist. Das Mischersignal wird dabei derart moduliert und überlagert, dass eine die Burst-Impulse umhüllende Kurve als NF-Hüllkurve approximativ sinusförmig mit einer - im Verhältnis zur Modulationsfrequenz der Messstrahlung - niederfrequenten NF-Hüllkurvenfrequenz verläuft.

Anschliessend wird einer Entfernung zum Messobjekt durch Auswerten eines aus dem Eingangsmesssignal erzeugten Messsignals, das dazu mit einem Referenzsignal verglichen wird, bestimmt. Insbesondere wird dabei das erzeugte Messsignals hinsichtlich einer Phasenlage gegenüber einem Referenzsignal verglichen, wobei das Referenzsignal beispielsweise aus der Detektion und Umformung eines durch eine bekannte Referenzstrecke geleiteten Anteils der Messstrahlung erzeugt werden kann.

Erfindungsgemäss nimmt beim Erzeugen des Messsignals jeweils während einer mit der aktiven Burstzeit verknüpften Abtastzeit das Messsignal vom Eingangsmesssignal abhängige Werte an und wird das Messsignal jeweils während einer mit der Totzeit verknüpften Haltezeit im Wesentlichen auf einem Wert, den dasselbe jeweils am Ende des ersten Zeitraums aufweist, konstant gehalten. Insbesondere kann dazu empfängerseitig ein so genanntes Abtast-Halte-Glied eingebunden werden.

Gattungsgemässe Abtast-Halte-Glieder sind aus dem Stand der Technik hinlänglich bekannt und werden unter anderem auch als Abtast-Halte-Schaltung, Sample-and-Hold-Schaltung bzw. -Glied (S&H) oder Track-and-Hold-Schaltung bzw. -Glied bezeichnet. Das zentrale Element eines Abtast-Halte-Glieds ist im Üblichen ein Kondensator, der eine Speicherfunktion für die eingehenden Analogwerte übernimmt. Dazu weist ein Abtast-Halte-Glied meist einen elektronischen Schalter zum Bestimmen der Abtast- und der Haltephase auf.

In einem eingeschalteten Zustand entspricht das Ausgangssignal eines Abtast-Halte-Glieds den Werten des Eingangssignals, während das Ausgangssignal in einem ausgeschalteten Zustand auf jenem Wert konstant bleibt, den das Ausgangssignal zum Zeitpunkt des Ausschaltens aufweist. Gemäss der Erfindung kann nun beispielsweise das Abtast-Halte-Glied jeweils zu Beginn der aktiven Burstzeit der empfangenen Messstrahlung eingeschaltet und jeweils zu Beginn einer Totzeit der empfangenen Messstrahlung ausgeschaltet werden.

Je nach Bandbreite des Abtast-Halte-Glieds kann der durch das Eingangssignal bewirkte Ladevorgang des Kondensators nach dem Einschalten des Abtast-Halte-Glieds ausgelegt werden, was z.B. auch die Einstellzeit des Abtast-Halte-Glieds beeinflusst. Unter der Einstellzeit ist dabei jene Zeit zu verstehen, bis die Spannung am Kondensator nach dem Einschalten des Abtast-Halte-Glieds der Eingangsspannung - innerhalb einer bestimmten Toleranz - entspricht. Weist das Abtast-Halte-Glied beispielsweise eine tiefe Bandbreite auf, so nähert sich die das Ausgangssignal bestimmende Kondensatorspannung während der mit der aktiven Burstzeit verknüpften Abtastzeit nur geringfügig an den Wert des ankommenden Burst-Impulses an, wohingegen bei sehr hohen Bandbreiten der Kondensator des Sample-Hold-Glieds vollständig auf den Wert des ankommenden Bursts aufgeladen wird.

Somit löst sich das erfindungsgemässe Entfernungsmessverfahren davon, dass die durch Überlagerung eines Mischersignals als Eingangssignal erzeugten niederfrequenten Burst-Impulse mit der NF-Hüllkurve nur während einer aktiven Burstzeit gefiltert werden, wobei bisher beim Zuschalten des Filters bzw. Transimpedanzverstärkers unerwünschte Schwingvorgänge auftreten und eine Einschwingdauer notwendig ist. Dahingegen kann nun das mit überlagertem Mischersignal erzeugte burstförmige Eingangssignal kontinuierlich durch einen Transimpedanzverstärker verstärkt und dabei tiefpassgefiltert werden, sodass Frequenzkomponenten im Bereich der im Verhältnis zur NF-Hüllkurvenfrequenz hohen Modulationsfrequenz herausfallen und unerwünschte Schwingvorgänge durch ein Filtern nur während der aktiven Burstzeit vermieden werden können.

Anschliessend weist das Eingangsignal im Wesentlichen rechteckförmige Burst-Impulse mit der Breite der aktiven Burstzeit - wobei die Burstpakete jeweils in etwa als über die aktive Burstzeit gemittelt angesehen werden können - und mit näherungsweise sinusförmig variierenden Amplituden auf. Durch das Sample-Hold-Glied können die Werte der eingehenden Bursts jeweils über die Totzeit hinweg gehalten werden, wobei sich somit eine signalverstärkende Wirkung ergibt. Es wird dabei also ein Messsignal mit - grob betrachtet - dem Verlauf der NF-Hüllkurve erzeugt, das anhand des Phasenmessprinzips zur Bestimmung der Entfernung zum Messobjekt ausgewertet werden kann, wobei das Messsignal vor dem Auswerten vorzugsweise noch mit einem Bandpassfilter bzw. Antialiasingfilter, der zur Glättung des Messsignals im Wesentlichen nur Frequenzen um die NF-Hüllkurvenfrequenz passieren lässt, gefiltert wird.

Im Gegensatz zu des Weiteren aus dem Stand der Technik hinlänglich bekannten Empfangsschaltungen, wobei anhand eines Abtast-Halte-Glieds ein Messsignal, das direkt aus der reflektierten Messstrahlung beim Empfang erzeugt wird und somit dieselbe Frequenz wie die Messstrahlung aufweist, wird erfindungsgemäss das direkte Empfangs-Messignal der Photodiode mit einer geeigneten Mischerfrequenz überlagert und somit ein niederfrequentes burstförmiges Eingangsmesssignal mit niederfrequenter Hüllkurve erzeugt, welches durch das Abtast-Halte-Glied gesampelt wird. Gemäss der Erfindung ist also die Abtastung bzw. die Abtastzeit mit der Burstfrequenz verknüpft und nicht - wie bei direkter Abtastung des Photodioden-Signals entsprechend dem Stand der Technik - mit der Frequenz der Messstrahlung.

Eine solche nach dem Stand der Technik bekannte Empfangsschaltung ist z.B. in der Veröffentlichungsschrift US 2004/0135992 A1 beschrieben, wobei eine intensitätsmodulierte Messstrahlung mit einer verhältnismässig niedrigen Frequenz von z.B. 20 MHz verwendet wird. Das beim Empfangen der reflektierten Messstrahlung erzeugte Photodioden-Signal - welches während der aktiven Burstzeit dieselbe Frequenz wie die modulierte Messstrahlung aufweist (d.h. z.B. 20 MHz) - wird dabei im Gegensatz zur vorliegenden Erfindung direkt abgetastet und ausgewertet.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein Modulationssignal-Diagramm zur Erzeugung einer nach dem Burstmodulationsprinzip modulierten Messstrahlung;
- Fig. 2: ein gemäss der Erfindung durch Empfangen eines reflektierten Teils der Messstrahlung erzeugtes Eingangsmesssignal, wobei beim Empfangen und Umformen eine Überlagerung mit einem Mischersignal erfolgt;
- Fig. 3: das erzeugte Eingangsmesssignal als Abtast-Halte-Glied-Eingangssignal und das davon abhängige Abtast-Halte-Glied-Ausgangssignal;
- Fig. 4: eine Ausführungsform einer erfindungsgemässen Empfangsschaltung für eine optisch-elektronische Entfernungsmessvorrichtung mit einem Abtast-Halte-Glied;
- Fig. 5: eine weitere Ausführungsform einer erfindungsgemässen Empfangsschaltung für eine optisch-elektronische Entfernungsmessvorrichtung mit einem Abtast-Halte-Glied; und
- Fig. 6: eine Ausführungsform einer erfindungsgemässen Entfernungsmessvorrichtung.

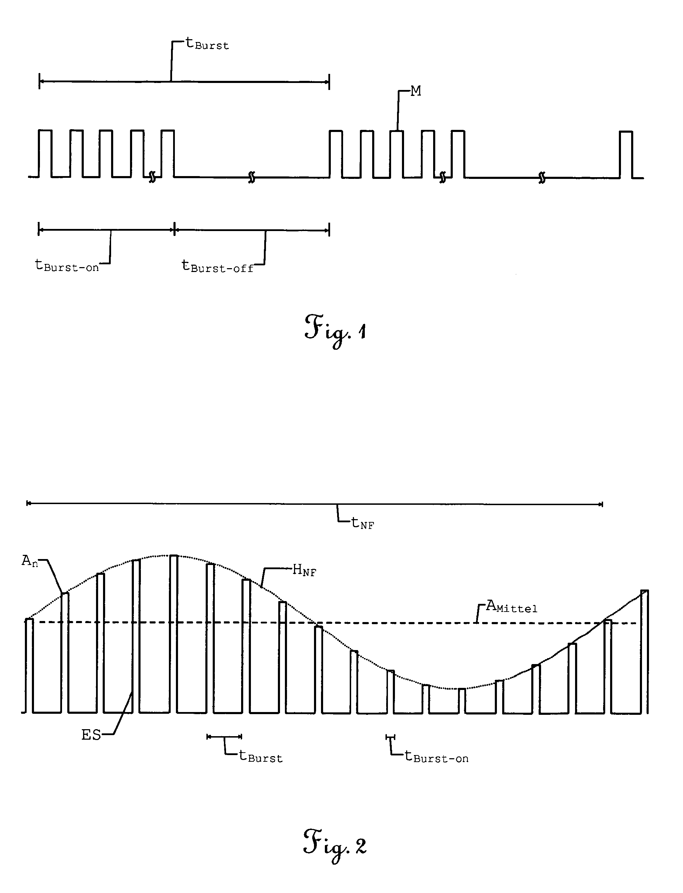

Figur 1 zeigt ein Burstmodulationssignal-Diagramm zur Verdeutlichung der Kenngrössen für die Burstmodulation der emittierten optischen Strahlung. Die Zeitdauer, während der das Modulationssignal M mit einer bestimmten Modulationsfrequenz anliegt, wird als aktive Burstzeit t_{Burst-on} bezeichnet. Hingegen ist die Totzeit t_{Burst-off} jene Dauer, in welcher kein Modulationssignal M anliegt. Die Periodendauer einer aktiven Burstzeit t_{Burst-on} und einer Totzeit t_{Burst-off} wird als Burstperiodendauer t_{Burst} mit t_{Burst} = t_{Burst-on} + t_{Burst-off} bezeichnet.

Das Burstsignal weist einen Duty Cycle auf, der als das Verhältnis der aktiven Burstdauer t_{Burst-on} zur Messperiode t_{Burst} in % definiert ist. Dadurch unterscheidet sich die Burstmodulation von einer Pulsmodulation, bei der das Modulationssignal über die Gesamtdauer einer Messperiode quasi kontinuierlich anliegt. Bei der Burstmodulation hingegen liegt das Modulationssignal M nur während eines Teils der Burstperiodendauer t_{Burst} an. Während der aktiven Burstzeit t_{Burst-on} wird eine Pulsfolge mit Pulsen - insbesondere von etwa 2 ns oder kürzer - ausgesendet. In Figur 1 ist rein beispielhaft ein rechteckmoduliertes Modulationssignal M mit einer - insbesondere höher als 100 MHz - gewählten Modulationsfrequenz gezeigt. Eine Rechteckmodulierung kann dabei insgesamt zu einer verringerten Peakleistung führen. Jedoch kann die Modulation während der aktiven Burstzeit t_{Burst-on} auch gemäss sämtlichen aus dem Stand der Technik bekannten Weisen der Pulsmodulation erfolgen.

Der Duty Cycle ist unter anderem ein Mass für die erzielbaren Verbesserungen im Signal/Rausch-Verhältnis (S/N) und kann beispielsweise zu etwa 5 % bis etwa 50 %, im Speziellen zu etwa 10 % bis etwa 40 %, gewählt werden.

Figur 2 zeigt ein Diagramm zur Veranschaulichung des erfindungsgemäss erzeugten Eingangsmesssignals ES.

Beim Empfangen eines Teils der am Messobjekt reflektierten, nach dem Burstmodulationsprinzip modulierten Messstrahlung und bei der Umwandlung in elektrische Signale erfolgt eine Überlagerung mit einem Mischersignal derart, dass das von der empfangenen Strahlung abhängige Eingangsmesssignal ES im Wesentlichen Burst-Impulse mit sinusförmig variierender Amplitude und konstanter Breite aufweist. Die Breite der Burst-Impulse ist durch die aktive Burstzeit bestimmt.

Eine die Burst-Impulse umhüllende Kurve H_{NF} wird nun als NF-Hüllkurve bezeichnet, die im Wesentlichen - d.h. approximativ - sinusförmig mit einer NF-Hüllkurvenfrequenz, die im Bereich zwischen 0,5 und 500 kHz liegen kann, verläuft.

Rein beispielhaft kann für das erfindungsgemässe Entfernungsmessverfahren die Burst-Periodendauer t_{Burst} und die NF-Hüllkurvenfrequenz derart gewählt werden, dass eine durch die NF-Hüllkurvenfrequenz bestimmte NF-Hüllkurvenperiodendauer t_{NF} das Sechzehnfache der Burst-Periodendauer t_{Burst} beträgt, sodass also eine NF-Hüllkurvenperiode sechzehn Burst-Impulse enthält.

Weil die Burst-Impulse ein Abbild der Intensität der einfallenden Messstrahlung sind, enthalten sie auch Frequenzkomponenten in der Region der Modulationsfrequenz der Messstrahlung. Diese Komponenten können beispielsweise anhand eines tiefpassfilternden Transimpedanzverstärkers weggefiltert werden, sodass die Burstpakete als über die aktive Burstzeit T_{Burst-on} gemittelt angesehen werden können. Es liegen dann also nur im Wesentlichen rechteckförmige Impulse der Breite T_{Burst-on} vor, welche die Amplituden An aufweisen. Gemäss oben beispielhaft beschriebener Wahl des Verhältnisses der NF-Hüllkurvenperiodendauer t_{NF} zur Burst-Periodendauer t_{Burst} weist dann eine NF-Hüllkurvenperiode sechzehn solcher Impulse auf. Ihre jeweiligen Amplituden Aₙ bilden die Stützwerte der sinusförmigen NF-Hüllkurve H_{NF}, wobei dann An z.B. mit Aₙ = A_{Mittel} + A*sin(n* (2π/16)) beschrieben werden kann.

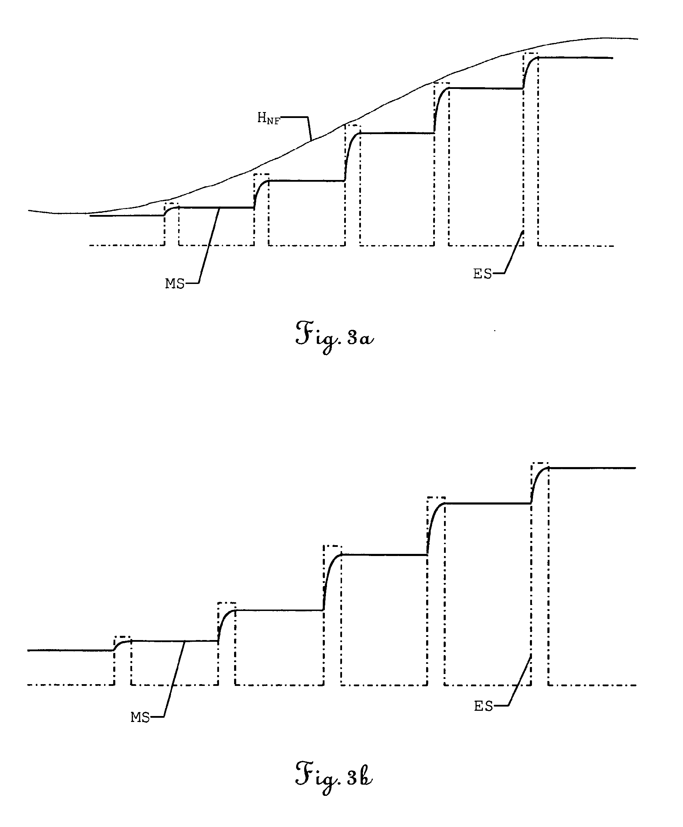

Figur 3 zeigt das erzeugte Eingangsmesssignal ES als Abtast-Halte-Glied-Eingangssignal und das davon abhängig erzeugte Abtast-Halte-Glied-Ausgangssignal MS. In Figur 3a ist das Eingangsmesssignal ES mit der sich daraus ergebenden NF-Hüllkurve H_{NF} und in Figur 3b ohne umhüllende Kurve dargestellt.

Jeweils während eines mit der aktiven Burstzeit t_{Burst-on} verknüpften Abtastzeitraums, im Speziellen während der aktiven Burstzeit t_{Burst-on} der empfangenen Messstrahlung, nimmt das Ausgangssignal MS des Abtast-Halte-Glieds vom Burst-Impuls des Eingangsmesssignals ES abhängige Werte an. Im Speziellen nähert sich aufgrund des Aufladevorgangs eines insbesondere als Kondensator ausgebildeten Signalwertspeichermittels des Abtast-Halte-Glieds das Ausgangssignal MS mit exponentiellem Verlauf der Amplitude des Burst-Impulses. Je nach Auslegung des Abtast-Halte-Glieds, beispielsweise je nach Wahl der Bandbreite des Abtast-Halte-Glieds, nähert sich die das Ausgangssignal MS bestimmende Kondensatorspannung während des ersten Zeitraums, d.h. während der Abtastzeit, nur geringfügig an den Wert des ankommenden Burst-Impulses an oder wird der Kondensator des Sample-Hold-Glieds vollständig auf den Wert des ankommenden Bursts aufgeladen.

Insbesondere kann das Abtast-Halte-Glied derart ausgelegt werden, dass der Wert des Ausgangssignals MS erst am Ende der Abtastzeit im Wesentlichen etwa dem Wert der Amplitude des Burst-Impulses entspricht. Alternativ ist auch eine Auslegung des Abtast-Halte-Glieds derart möglich, sodass am Ende des ersten Zeitraums der Wert des Ausgangssignals MS geringfügig unterhalb der Amplitude des Burst-Impulses liegt.

Jeweils während einer mit der Totzeit verknüpften Haltezeit wird das Abtast-Halte-Glied-Ausgangssignal MS durch das insbesondere als Kondensator ausgebildete Signalwertspeichermittel im Wesentlichen auf einem Wert, den das Ausgangssignal MS jeweils am Ende der Abtastzeit aufweist, konstant gehalten.

Dabei ist zu beachten, dass im Allgemeinen während der Haltezeit stets eine Haltedrift auftritt, welche insbesondere durch einen Entladestrom am Kondensator des Abtast-Halte-Glieds bestimmt wird, sodass ein exaktes Konstanthalten des Werts üblicherweise nicht erreicht werden kann. Hingegen ist unter dem Begriff Konstanthalten ein Halten des Werts im Rahmen üblicher Haltedriften zu verstehen.

Das Ausgangssignal MS des Abtast-Halte-Glieds kann anschliessend anhand eines Bandpasses, welcher lediglich Frequenzen im Bereich der NF-Hüllkurvenfrequenz passieren lässt, gefiltert werden und stellt das anhand des Phasenprinzips auszuwertende Messsignal dar.

Beispielsweise kann das Messsignal durch einen Analog-Digital-Wandler digitalisiert und anhand einer Signalverarbeitungsanlage mit einem Referenzsignal - zur Bestimmung der Entfernung des Messobjekts - hinsichtlich einer Phasenlage verglichen werden.

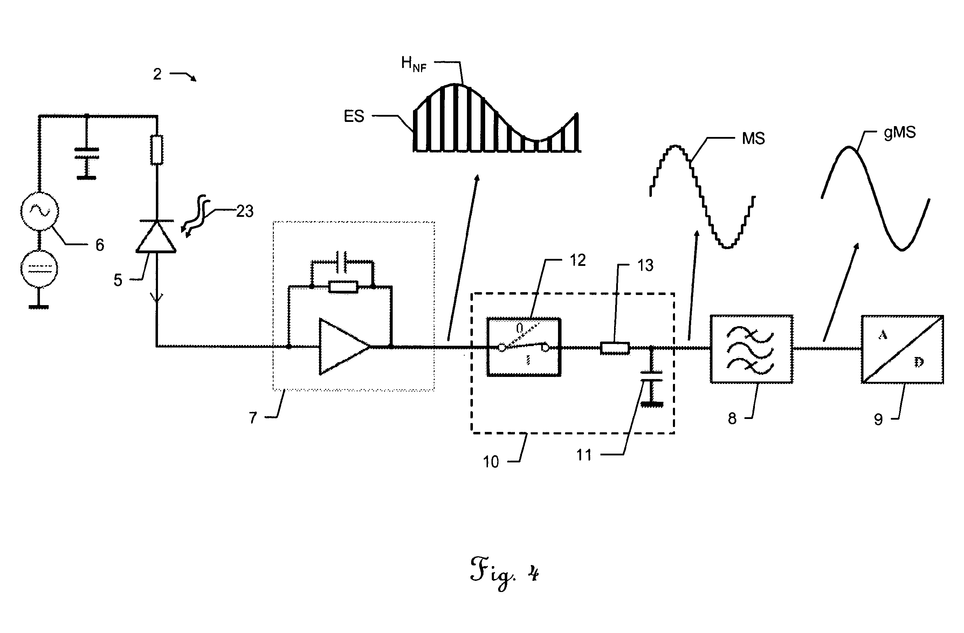

Figur 4 zeigt eine erfindungsgemässe Empfangsschaltung 2 für eine optisch-elektronische Entfernungsmessvorrichtung, die zur Aussendung einer nach dem Burstmodulatoionsprinzip modulierten Messstrahlung ausgebildet ist.

Die Empfangsschaltung 2 weist einen Empfänger 5 zur Umformung mindestens eines Teiles der an einem Messobjekt reflektierten, nach dem Burstmodulationsprinzip modulierten Messstrahlung 23 in ein elektrisches Eingangsmesssignal ES auf. Beispielsweise kann als Empfänger 5 eine Avalanche-Photodiode (APD) verwendet werden, die über einen Vorwiderstand an einer modulierten Vorspannung als Mischerspannung anliegt, wofür die Empfangsschaltung entsprechende Mittel 6 zum Anlegen der modulierten Mischerspannung aufweist.

Die Mischerspannung kann dabei nun derart moduliert sein, dass der in Abhängigkeit der empfangenen Messstrahlung erzeugte APD-Strom als das Eingangsmesssignal ES im Wesentlichen Burst-Impulse konstanter Breite, die durch die aktive Burstzeit bestimmt ist, und modulierter Amplitude aufweist und - entsprechend Figur 2 - eine die Burst-Impulse umhüllende Kurve als NF-Hüllkurve H_{NF} im Wesentlichen sinusförmig mit einer niederfrequenten NF-Hüllkurvenfrequenz verläuft.

Der erzeugte APD-Strom als Eingangsmesssignal ES weist nun noch Frequenzkomponenten in der Region der Modulationsfrequenz auf, die durch einen als Tiefpassfilter wirkenden Transimpedanzverstärker 7, der zwischen dem Empfänger und dem Abtast-Halte-Glied 10 geschaltet ist und den APD-Strom in eine Ausgangsspannung wandelt, herausgefiltert werden können.

Es liegen dann also nur im Wesentlichen rechteckförmige Spannungs-Impulse der Breite T_{Burst-on} vor, welche sinusförmig variierende Amplituden aufweisen.

Erfindungsgemäss wird die Ausgangsspannung des Transimpedanzverstärkers 7, die das gefilterte APD-Eingangsmesssignal ES darstellt, durch ein Abtast-Halte-Glied 10 in eine Abtast-Halte-Glied-Ausgangsspannung als Messsignal MS umgewandelt, wobei die Ausgangsspannung des Transimpedanzverstärkers als Abtast-Halte-Glied-Eingangsspannung betrachtet werden kann.

Dazu kann das Abtast-Halte-Glied 10 einen elektronischen Schalter 12 zur Festlegung der Abtast- und der Haltezeit, einen Kondensator 11 zur Haltung eines Spannungswertes während der Haltezeit und einen Ladewiderstand 13 unter anderem zur Auslegung der Bandbreite des Abtast-Halte-Glieds 10, die z.B. die Einstellzeit beeinflusst, aufweisen. Die am Kondensator 11 anliegende Spannung ist die Abtast-Halte-Glied-Ausgangsspannung, die das für die Bestimmung einer Entfernung zum Messobjekt auszuwertende Messsignal MS darstellt.

Gemäss der Erfindung ist die Abtastzeit des Abtast-Halte-Glieds 10 mit der aktiven Burstzeit und die Haltezeit mit der Totzeit der empfangenen Messstrahlung 23 verknüpft. Im Speziellen kann die Abtastzeit gleich der aktiven Burstzeit und die die Haltezeit gleich der Totzeit gewählt werden. Der Schalter 12 ist dann während der aktiven Burstzeit geschlossen, sodass die Kondensatorspannung jeweils durch den ankommenden Burst-Impuls verändert wird, und während der Totzeit offen. Während der Totzeit wird also die Kondensatorspannung im Wesentlichen auf jenem Spannungswert konstant gehalten, welcher zum Zeitpunkt des Öffnens des Schalters 12 auftritt.

Alternativ kann jedoch die Haltezeit auch etwas länger als die Totzeit und die Abtastzeit entsprechend etwas kürzer als die aktive Burstzeit gewählt werden, sodass die Haltezeit jeweils geringfügig mit der vorangehenden und/oder der nachfolgenden aktiven Burstzeit der empfangenen Messstrahlung überlappt. Das Eingangsmesssignal ES wird also in dieser Variante nicht jeweils während der gesamten aktiven Burstzeit abgetastet. Rein beispielhaft kann bei einem Duty Cycle von 20 % die Abtastzeit z.B. als das 0,8-fache der aktiven Burstzeit und entsprechend die Haltezeit als das 1,05-fache der Totzeit gewählt werden, wobei dann die Haltezeit mit der vorangehenden und der nachfolgenden aktiven Burstzeit geringfügig überlappt.

Die Einstellzeit des Abtast-Halte-Glieds 10 kann dabei insbesondere ungefähr gleich oder etwas länger als die Abtastzeit gewählt werden. Im ersten Fall ist dann der Kondensator 11 etwa erst am Ende der Abtastzeit vollständig auf einen Wert des ankommenden Bursts aufgeladen bzw. entladen, sodass die Kondensatorspannung am Ende der Abtastzeit etwa der Abtast-Halte-Glied-Eingangsspannung entspricht. Bei einer Auslegung des Abtast-Halte-Glieds 10, sodass die Einstellzeit etwas länger als die Abtastzeit andauert, wird der Kondensator 11 jeweils nicht vollständig auf den Wert der ankommenden Bursts aufgeladen bzw. entladen.

Dem Abtast-Halte-Glied 10 ist im Speziellen ein Bandpassfilter 8, insbesondere ein Antialiasingfilter, mit Passierungsfrequenzen lediglich in der Umgebung der NF-Hüllkurvenfrequenz nachgeschaltet, sodass das als das Messsignal MS vorliegende Abtast-Halte-Glied-Ausgangssignal geglättet wird.

Das bandpassgefilterte Messsignal gMS kann nun durch einen Analog-Digital-Wandler 9 digitalisiert werden. Anschliessend kann eine Auswertung des Messsignals beispielsweise durch eine entsprechende Signalverarbeitungssoftware zur Bestimmung der Entfernung des Messobjekts erfolgen.

Die am Kondensator 11 des Abtast-Halte-Glieds 10 auftretende Rauschspannung kann wie folgt betrachtet werden: Während der aktiven Burstzeit T_{Burst-on} ist der Schalter 12 geschlossen und das Rauschen hat die Gestalt des tiefpassgefilterten Eingangsrauchens. Nachdem der Schalter 12 geöffnet wurde bleibt die Spannung auf dem letzten Wert der aktiven Burstzeit bestehen. Während der Haltezeit ergibt sich daher ein konstanter Impuls als Rauschen. Die Höhe dieses Impulses ist dabei ein Zufallsprozess mit einem Erwartungswert von Null.

Weil der vor dem Analog-Digital-Wandler 9 liegende Bandpassfilter lediglich die Frequenzen um die NF-Hüllkurvenfrequenz passieren lässt, interessiert die Rauschleistungsdichte des während der Haltezeit auftretenden Prozesses nur in der Umgebung der NF-Hüllkurvenfrequenz.

Eine Spezifikation bzw. Optimierung der Empfangsschaltung 2, beispielsweise eine optimale Wahl der Bandbreite des Abtast-Halte-Glieds 10, kann je nach Anforderungen an das die Empfangsschaltung 2 einbindende Entfernungsmessgerät durch einen Fachmann vorgenommen werden.

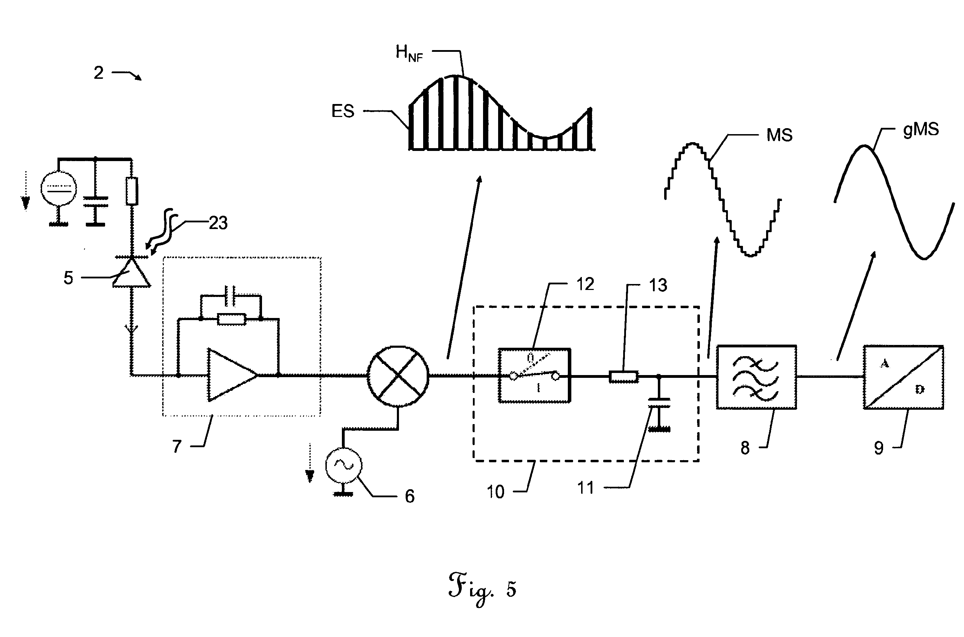

Figur 5 zeigt eine weitere Ausführungsvariante der erfindungsgemässen Empfangsschaltung 2. Im Unterschied zur in Figur 4 dargestellten Empfangsschaltung, bei welcher die Überlagerung des Eingangsmesssignals (ES) mit der Mischerfrequenz quasi über der Diode erfolgt, weist die in Figur 5 gezeigte Empfangsschaltung einen nach dem Hochfrequenz-Transimpedanzverstärker 7 geschalteten Frequenzsynthesizer zum modulieren der Burst-Impuls-Amplituden des Eingangsmesssignals (ES) auf.

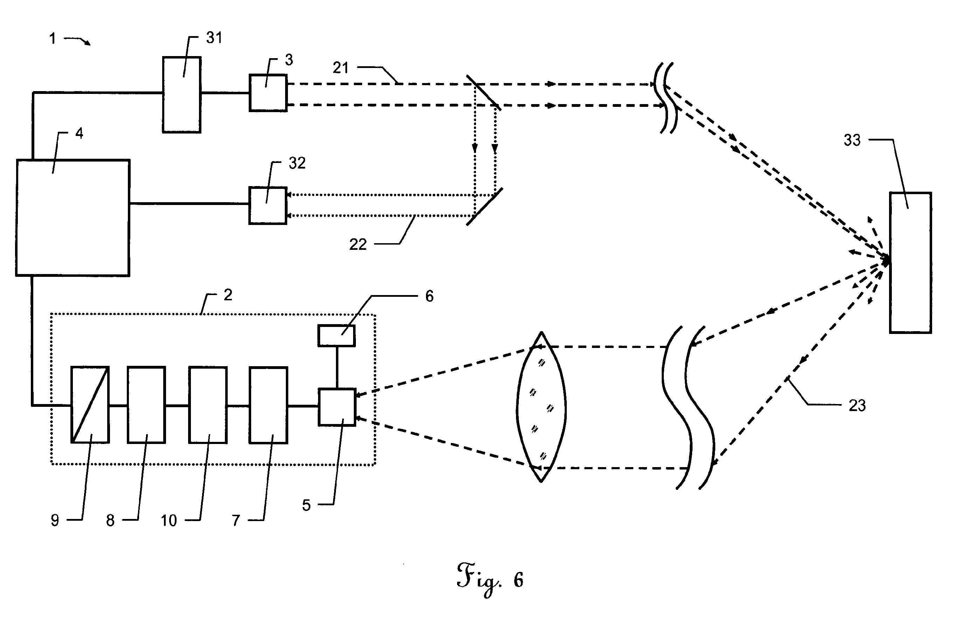

Figur 6 zeigt eine erfindungsgemässe optisch-elektronische Entfernungsmessvorrichtung 1 mit einem Sender 3 zur Emission von nach dem Burstmodulationsprinzip - mit einer Burst-Periodendauer aus einer aktiven Burstzeit und einer Totzeit - modulierter optischer Messstrahlung 21 in Richtung eines Messobjekts 33. Des Weiteren weist die Entfernungsmessvorrichtung 1 die in Figur 4 dargestellte Empfangsschaltung 2 und eine Signalverarbeitungsanlage 4 zur Bestimmung einer Entfernung durch Auswertung des Messsignals anhand von Referenzsignalen nach dem Phasenmessprinzip auf.

Die Laserquelle als Sender 3 emittiert burstförmig modulierte optische Messstrahlung 21 in Richtung eines Messobjekts 33, dessen Abstand von der Entfernungsmessvorrichtung 1 gemessen werden soll. Durch einen Strahlteiler wird ein geringer Anteil der Messstrahlung als Referenzstrahlung 22 abgezweigt. Mindestens eine Teil der am Messobjekt reflektierten Messstrahlung 23 wird von einer Empfangsoptik gesammelt und auf den Empfänger 5 geleitet, der wie oben beschrieben an einer modulierten Mischerspannung liegt. Die Referenzstrahlung 22 wird über einen Umlenkspiegel auf einen Referenzempfänger 32 geleitet. Die von der Referenzstrahlung 22 durchlaufene Wegstrecke vom Strahlteiler zum Referenzempfänger 32 bildet dabei die bekannte Referenzstrecke.

Die Burstmodulation der optischen Messstrahlung erfolgt beispielsweise durch ein am Sender 3 angelegtes Modulationssignal, das z.B. von einem Frequenzsynthesizer 31 erzeugt werden kann.

Das durch den Empfänger 5 quasi als Abbild der empfangenen Messstrahlung 23 erzeugte Eingangsmesssignal wird durch die Empfangsschaltung 2 - wie in der Beschreibung zu Figur 4 erläutert - in ein Messsignal umgewandelt und anschliessend digitalisiert. Dafür weist die Empfangsschaltung 2 Mittel 6 zum insbesondere kontinuierlichen Anlegen einer modulierten Mischerspannung am Empfänger 5, den Empfänger 5 selbst, einen Impedanzverstärker 7, erfindungsgemäss das Abtast-Halte-Glied 10, einen Bandpassfilter 8 mit Passierungsfrequenzen im Bereich um die NF-Hüllkurvenfrequenz sowie einen Analog-Digital-Wandler 9 auf.

Die Signalverarbeitungsanlage 4 wertet nun das digitalisierte Messsignal anhand eines durch den Referenzempfänger 32 erzeugten Referenzsignals aus und bestimmt daraus die gesuchte Distanz des Messobjekts.

Die erfindungsgemässe Entfernungsmessvorrichtung 1 kann dabei insbesondere als Handgerät ausgebildet sein.

Alternativ zu der in Figur 6 dargestellten Ausführungsform, bei welcher ein geringer Teil der Messstrahlung 23 als Referenzstrahlung 22 abgezweigt und daraus ein Referenzsignal erzeugt wird, kann - wie nach dem Stand der Technik bekannt - auch direkt das Modulationssignal, welches am Sender 3 anliegt, als Referenzsignal zur Auswertung bzw. Kalibrierung des erzeugten Messsignals verwendet werden. Beispielsweise kann das am Sender 3 anliegende Modulationssignal direkt der Signalverarbeitungsanlage 4 als Referenzsignal bereitgestellt werden, sodass das erfindungsgemäss erzeugte Messsignal anhand dieses Referenzsignals ausgewertet und daraus die gesuchte Distanz des Messobjekts bestimmt wird.

Es versteht sich, dass diese dargestellten Figuren nur mögliche Ausführungsbeispiele schematisch darstellen. Beispielsweise kann das Abtast-Halte-Glied gemäss weiteren nach dem Stand der Technik bekannten Ausführungen, wie z.B. integriert in den Analog-Digital-Wandler, ausgebildet sein. Gegebenenfalls kann - zusätzlich oder alternativ - auch für den Referenzempfänger eine erfindungsgemässe Empfangsschaltung mit einem Abtast-Halte-Glied vorgesehen sein.

## Patentansprüche

1. Optisch-elektronisches Entfernungsmessverfahren nach dem Phasenmessprinzip mit den Schritten
● Aussenden einer nach dem Burstmodulationsprinzip - mit einer Burst-Periodendauer (t_{Burst}) aus einer aktiven Burstzeit (t_{Burst-on}) und einer Totzeit (t_{Burst-off}) - modulierten optischen Messstrahlung (21) in Richtung eines Messobjekts (33),
● Empfangen mindestens eines Teiles von am Messobjekt (33) reflektierter Messstrahlung (23) und Umformen in ein Eingangsmesssignal (ES), und
● Bestimmen einer Entfernung zum Messobjekt (33) durch Auswerten eines aus dem Eingangsmesssignal (ES) erzeugten Messsignals (MS,gMS),
**dadurch gekennzeichnet, dass**
● beim Empfangen und Umformen eine, insbesondere kontinuierliche, Überlagerung mit einem Mischersignal derart erfolgt, dass das Eingangsmesssignal (ES) im Wesentlichen Burst-Impulse
□ konstanter Breite, die durch die aktive Burstzeit (t_{Burst-on}) bestimmt ist, und
□ modulierter Amplitude
aufweist und eine die Burst-Impulse umhüllende Kurve als NF-Hüllkurve (HNF) approximativ sinusförmig mit einer niederfrequenten NF-Hüllkurvenfrequenz verläuft,
sowie dass
● jeweils während einer mit der aktiven Burstzeit (t_{Burst-on}) verknüpften Abtastzeit das Messsignal (MS,gMS) vom Eingangsmesssignal (ES) abhängige Werte annimmt und
● jeweils während einer mit der Totzeit (t_{Burst-off}) verknüpften Haltezeit das Messsignal (MS,gMS) im Wesentlichen auf einem Wert, den das Messsignal (MS,gMS) jeweils am Ende der Abtastzeit aufweist, konstant gehalten wird.

2. Entfernungsmessverfahren nach Anspruch 1,
**dadurch gekennzeichnet, dass**
das Eingangsmesssignal (ES) tiefpassgefiltert wird, sodass Frequenzkomponenten im Frequenzbereich um eine Modulationsfrequenz, mit welcher die Messstrahlung (21) während der aktiven Burstzeit (t_{Burst-on}) moduliert wird, blockiert werden.

3. Entfernungsmessverfahren nach Anspruch 1 oder 2,
**dadurch gekennzeichnet, dass**
während der Abtastzeit das Messsignal (MS,gMS) von der Amplitude des Burst-Impulses abhängige Werte annimmt.

4. Entfernungsmessverfahren nach Anspruch 3,
**dadurch gekennzeichnet, dass**
während der Abtastzeit das Messsignal (MS,gMS) sich mit exponentiellem Verlauf der Amplitude des Burst-Impulses nähert, insbesondere derart, dass der Wert des Messsignals (MS,gMS)
● erst am Ende der Abtastzeit im Wesentlichen dem Wert der Amplitude des Burst-Impulses entspricht oder
● am Ende der Abtastzeit geringfügig unterhalb der Amplitude des Burst-Impulses liegt.

5. Entfernungsmessverfahren nach einem der vorangehenden Ansprüche,
**dadurch gekennzeichnet, dass**
das Messsignal (MS,gMS) vor dem Auswerten mit einem Bandpassfilter (8), der im Wesentlichen nur Frequenzen um die NF-Hüllkurvenfrequenz passieren lässt, gefiltert wird.

6. Entfernungsmessverfahren nach einem der vorangehenden Ansprüche,
**dadurch gekennzeichnet, dass**
● die Messstrahlung (21) während der aktiven Burstzeit (t_{Burst-on}) mit einer Modulationsfrequenz grösser 100 MHz moduliert wird und
● die Überlagerung mit der Mischerfrequenz derart erfolgt, dass die NF-Hüllkurvenfrequenz im Bereich zwischen 0,5 und 500 kHz liegt.

7. Entfernungsmessverfahren nach einem der vorangehenden Ansprüche,
**dadurch gekennzeichnet, dass**
die Burst-Periodendauer (t_{Burst}) und die NF-Hüllkurvenfrequenz derart gewählt werden, dass die NF-Hüllkurvenperiodendauer das Sechzehnfache der Burst-Periodendauer (t_{Burst}) beträgt.

8. Entfernungsmessverfahren nach einem der vorangehenden Ansprüche,
**dadurch gekennzeichnet, dass**
ein Duty Cycle, der durch das Verhältnis der aktiven Burstzeit (t_{Burst-on}) zur Burst-Periodendauer (t_{Burst}) definiert ist, von etwa 5 % bis etwa 50 %, insbesondere etwa 10 % bis etwa 40 %, erzielt wird.

9. Entfernungsmessverfahren nach einem der vorangehenden Ansprüche,
**dadurch gekennzeichnet, dass**
das Auswerten des Messsignals (MS,gMS) hinsichtlich einer Phasenlage gegenüber einem Referenzsignal erfolgt, das aus der Detektion und Umformung eines durch eine bekannte Referenzstrecke geleiteten Anteils (22) der Messstrahlung erzeugt wird.

10. Empfangsschaltung (2) für eine optisch-elektronische Entfernungsmessvorrichtung (1) mit
● einem Empfänger (5) zur Umformung mindestens eines Teiles (23) von an einem Messobjekt (33) reflektierter, nach dem Burstmodulationsprinzip - mit einer Burst-Periodendauer (t_{Burst}) aus einer aktiven Burstzeit (t_{Burst-on}) und einer Totzeit (t_{Burst-off}) - modulierter, optischer Messstrahlung (21) in ein elektrisches Eingangsmesssignal (ES),
wobei die Empfangsschaltung (2) zur Erzeugung eines zur Auswertung nach dem Phasenmessprinzip geeigneten Messsignals (MS,gMS) aus dem Eingangsmesssignal (ES) ausgebildet ist,
**gekennzeichnet durch**
● Mittel (6) zum, insbesondere kontinuierlichen, Anlegen einer modulierten Mischerspannung am Empfänger (5), sodass das Eingangsmesssignal (ES) im Wesentlichen Burst-Impulse
□ konstanter Breite, die **durch** die aktive Burstzeit (t_{Burst-on}) bestimmt ist, und
□ modulierter Amplitude
aufweist und eine die Burst-Impulse umhüllende Kurve als NF-Hüllkurve (H_{NF}) approximativ sinusförmig mit einer niederfrequenten NF-Hüllkurvenfrequenz verläuft, sowie
● ein Abtast-Halte-Glied (10) mit
□ einer mit der aktiven Burstzeit (t_{Burst-on}) verknüpften Abtastzeit und
□ einer mit der Totzeit (t_{Burst-off}) verknüpften Haltezeit.

11. Empfangsschaltung (2) nach Anspruch 10,
**gekennzeichnet durch**
einen dem Abtast-Halte-Glied (10) nachgeschalteten Bandpassfilter (8) mit Passierungsfrequenzen in einem Bereich um die NF-Hüllkurvenfrequenz.

12. Empfangsschaltung (2) nach Anspruch 10 oder 11,
**dadurch gekennzeichnet, dass**
die Empfangsschaltung (2) einen zwischen dem Empfänger (5) und dem Abtast-Halte-Glied (10) geschalteten Transimpedanzverstärker (7) aufweist, der zur Tiefpassfilterung ausgebildet ist, sodass Frequenzkomponenten des Eingangsmesssignals (ES) im Frequenzbereich um eine Modulationsfrequenz, mit welcher die Messstrahlung (21) während der aktiven Burstzeit moduliert ist, blockiert werden.

13. Empfangsschaltung (2) nach einem der Ansprüche 10 bis 12,
**dadurch gekennzeichnet, dass**
eine Einstellzeit des Abtast-Halte-Glieds (10) ungefähr gleich oder etwas länger als die Abtastzeit gewählt wird.

14. Empfangsschaltung (2) nach einem der Ansprüche 10 bis 13,
**dadurch gekennzeichnet, dass**
das Abtast-Halte-Glied (10) mindestens aufweist
● einen Schalter (12) zur Festlegung der Abtast- und der Haltezeit,
● einen Kondensator (11) zur Konstanthaltung eines Signalwertes während der Haltezeit und
● einen Ladewiderstand (13) zur Auslegung des Abtast-Halte-Glieds (10) unter anderem hinsichtlich einer Einstellzeit.

15. Empfangsschaltung (2) nach einem der Ansprüche 10 bis 14,
**dadurch gekennzeichnet, dass**
das Abtast-Halte-Glied (10) zur Abtastung des durch Überlagerung mit der Mischerfrequenz erzeugten Eingangsmesssignals (ES), welches von der im Verhältnis zur Modulationsfrequenz der Messstrahlung (21) niederfrequenten NF-Hüllkurve (H_{NF}) umhüllt wird, ausgebildet ist.

16. Optisch-elektronische Entfernungsmessvorrichtung (1), insbesondere ausgebildet als Handgerät, mit
● einem Sender (3) zur Emission von nach dem Burstmodulationsprinzip - mit einer Burst-Periodendauer (t_{Burst}) aus einer aktiven Burstzeit (t_{Burst-on}) und einer Totzeit (t_{Burst-off}) - modulierter optischer Messstrahlung (21) in Richtung eines Messobjekts (33),
● einer Empfangsschaltung (2) nach einem der Ansprüche 10 bis 15 und
● einer Signalverarbeitungsanlage (4) zur Bestimmung einer Entfernung durch Auswertung des Messsignals (MS,gMS) nach dem Phasenmessprinzip, insbesondere wobei ein Referenzpfad zum Leiten eines Anteils (22) der Messstrahlung entlang einer bekannten Referenzstrecke auf einen zur Erzeugung eines Referenzsignals ausgebildeten Referenzempfänger vorgesehen ist und die Signalverarbeitungsanlage (4) das Messsignal (MS,gMS) hinsichtlich einer Phasenlage gegenüber dem Referenzsignal auswertet.

## Claims

1. Optoelectronic distance measuring method according to the phase measurement principle, comprising the steps
● emission of optical measuring radiation (21) modulated according to the burst modulation principle - with a burst period (t_{Burst}) comprising an active burst time (t_{Burst-on}) and a dead time (t_{Burst-off}) - in the direction of a measured object (33),
● reception of at least a part of measuring radiation (23) reflected by the measured object (33) and conversion into an input measuring signal (ES), and
● determination of a distance to the measured object (33) by evaluation of a measuring signal (MS, gMS) generated from the input measuring signal (ES),
**characterized in that**
● on reception and conversion, superposition, in particular continuous superposition, with a mixer signal is effected in such a way that the input measuring signal (ES) substantially has burst pulses
□ of constant width which is determined by the active burst time (t_{Burst-on}) and
□ modulated amplitude
and a curve enveloping the burst pulses, as an LF envelope curve (H_{LF}), varies approximately sinusoidally with a low envelope curve frequency,
and **in that**
● the measuring signal (MS, gMS) assumes values dependent on the input measuring signal (ES) in each case during a sampling time linked to the active burst time (t_{Burst-on}) and
● the measuring signal (MS, gMS) is kept substantially at a value which the measuring signal (MS, gMS) has in each case at the end of the sampling time, in each case during a hold time linked to the dead time (t_{Burst-off}).

2. Distance measuring method according to Claim 1, **characterized in that** the input measuring signal (ES) is filtered by a low-pass filter so that frequency components in the frequency range around a modulation frequency with which the measuring radiation (21) is modulated during the active burst time (t_{Burst-on}) are blocked.

3. Distance measuring method according to Claim 1 or 2, **characterized in that** the measuring signal (MS, gMS) assumes values dependent on the amplitude of the burst pulse during the sampling time.

4. Distance measuring method according to Claim 3, **characterized in that**
during the sampling time, the measuring signal (MS, gMS) approaches the amplitude of the burst pulse exponentially, in particular in such a way that the value of the measuring signal (MS, gMS)
● substantially corresponds to the value of the amplitude of the burst pulse only at the end of the sampling time or
● is slightly below the amplitude of the burst pulse at the end of the sampling time.

5. Distance measuring method according to any of the preceding claims, **characterized in that** the measuring signal (MS, gMS) is filtered before the evaluation with a bandpass filter (8) which allows through substantially only frequencies around the low envelope curve frequency.

6. Distance measuring method according to any of the preceding claims, **characterized in that**
● the measuring radiation (21) is modulated during the active burst time (t_{Burst-on}) with a modulation frequency greater than 100 MHz and
● the superposition with the mixer frequency is effected in such a way that the low envelope curve frequency is in the range between 0.5 and 500 kHz.

7. Distance measuring method according to any of the preceding claims, **characterized in that** the burst period (t_{Burst}) and the low envelope curve frequency are chosen so that the LF envelope curve period is sixteen times the burst period (t_{Burst}).

8. Distance measuring method according to any of the preceding claims, **characterized in that** a duty cycle, which is defined by the ratio of the active burst time (t_{Burst-on}) to the burst period (t_{Burst}), of about 5% to about 50%, in particular about 10% to about 40%, is achieved.

9. Distance measuring method according to any of the preceding claims, **characterized in that** the evaluation of the measuring signal (MS, gMS) with regard to a phase position is effected relative to a reference signal which is generated from the detection and conversion of a component (22) of the measuring radiation which is passed through a known reference distance.

10. Receiving circuit (2) for an optoelectronic distance measuring device (1), comprising
● a receiver (5) for converting at least a part (23) of optical measuring radiation (21) reflected by a measured object (33) and modulated according to the burst modulation principle - with a burst period (t_{Burst}) comprising an active burst time (t_{Burst-on}) and a dead time (t_{Burst-off}) - into an electrical input measuring signal (ES),
the receiving circuit (2) being formed for generating a measuring signal (MS, gMS), suitable for evaluation according to the phase measurement principle, from the input measuring signal (ES), **characterized by**
● means (6) for applying, in particular continuously, a modulated mixer voltage to the receiver (5) so that the input measuring signal (ES) substantially has burst pulses
□ of constant width which is determined by the active burst time (t_{Burst-on}) and
□ modulated amplitude
and a curve enveloping the burst pulses, as LF envelope curve (H_{LF}), varies approximately sinusoidally with a low envelope curve frequency, and
● a sample-and-hold member (10) with
□ a sampling time linked to the active burst time (t_{Burst-on}) and
□ a hold time linked to the dead time (t_{Burst-off}).

11. Receiving circuit (2) according to Claim 10, **characterized by** a bandpass filter (8) connected down-circuit of the sample-and-hold member (10) and having passing frequencies in a range around the low envelope curve frequency.

12. Receiving circuit (2) according to Claim 10 or 11, **characterized in that** the receiving circuit (2) has a transimpedance amplifier (7) which is connected between the receiver (5) and the sample-and-hold member (10) and is formed for low-pass filtering, so that frequency components of the input measuring signal (ES) in the frequency range around a modulation frequency with which the measuring radiation (21) is modulated during the active burst time are blocked.

13. Receiving circuit (2) according to any of Claims 10 to 12, **characterized in that** a response time of the sample-and-hold member (10) is chosen to be about equal to or somewhat longer than the sampling time.

14. Receiving circuit (2) according to any of Claims 10 to 13, **characterized in that** the sample-and-hold member (10) at least has
● a switch (12) for fixing the sampling time and the hold time,
● a capacitor (11) for keeping a signal value constant during the hold time and
● a charging resistor (13) for designing the sample-and-hold member (10), inter alia with regard to a response time.

15. Receiving circuit (2) according to any of Claims 10 to 14, **characterized in that** the sample-and-hold member (10) is formed for sampling the input measuring signal (ES) which is generated by superposition with the mixer frequency and is enveloped by the LF envelope curve (H_{LF}) which has a low frequency in relation to the modulation frequency of the measuring radiation (21).

16. Optoelectronic distance measuring device (1), in particular in the form of a hand-held device, comprising
● a transmitter (3) for emitting optical measuring radiation (21) modulated according to the burst modulation principle - with a burst period (t_{Burst}) comprising an active burst time (t_{Burst-on}) and a dead time (t_{Burst-off}) - in the direction of a measured object (33),
● a receiving circuit (2) according to any of Claims 10 to 15 and
● a signal processing unit (4) for determining a distance by evaluating the measuring signal (MS, gMS) according to the phase measurement principle, in particular a reference path being provided for passage of a component (22) of the measuring radiation along a known reference distance to a reference receiver formed for generating a reference signal, and the signal processing unit (4) evaluating the measuring signal (MS, gMS) with regard to a phase position relative to the reference signal.

## Revendications

1. Dispositif de mesure de distance optoélectronique selon le principe de mesure de phase avec les étapes :
● émission d'un rayonnement de mesure optique modulé d'après le principe de modulation de salves - avec une durée de période de salve (t_{Burst}) obtenue à partir d'un temps de salve active (t_{Burst-on}) et d'un temps mort (t_{Burst-off}) en direction d'un objet de mesure (33),
● réception d'au moins une partie du rayonnement de mesure (23) réfléchi sur l'objet de mesure (33) et conversion en un signal de mesure d'entrée (ES) et
● détermination d'une distance par rapport à l'objet de mesure (33) par évaluation d'un signal de mesure (MS, gMS) généré à partir du signal de mesure d'entrée (ES),
**caractérisé en ce que**
● lors de la réception et de la conversion une superposition, en particulier une superposition continue, avec un signal de mélangeur est effectuée de telle manière que le signal de mesure d'entrée (ES) présente essentiellement des impulsions de salve
□ de largeur constante qui est déterminée par le temps de salve active (t_{Burst-on}) et
□ d'amplitude modulée
et une courbe qui enveloppe les impulsions de salve comme courbe enveloppe MF (HNF) est approximativement de forme sinusoïdale avec une fréquence de courbe enveloppe NF basse fréquence
ainsi qu'en ce que
● le signal de mesure (MS, gMS) prend, respectivement pendant un temps de balayage enchaîné avec le temps de salve active (t_{Burst-on}), des valeurs qui dépendent du signal de mesure d'entrée (ES) et
● le signal de mesure (MS, gMS) est maintenu constant, respectivement pendant un temps de maintien enchaîné avec le temps mort (t_{Burst-off}), essentiellement à une valeur que le signal de mesure (MS, gMS) présente respectivement à la fin du temps de balayage.

2. Procédé de mesure de distance selon la revendication 1,
**caractérisé en ce**
**que** le signal de mesure d'entrée (ES) est filtré par un filtre passe-bas si bien que les composantes de la fréquence sont bloquées dans une plage de fréquence autour d'une fréquence de modulation avec laquelle le rayonnement de mesure (21) est modulé pendant le temps de salve active (t_{Burst-on}).

3. Procédé de mesure de distance selon la revendication 1 ou 2,
**caractérisé en ce**
**que** le signal de mesure (MS, gMS) prend, pendant le temps de balayage, des valeurs qui dépendent de l'amplitude de l'impulsion de salve.

4. Procédé de mesure de distance selon la revendication 3,
**caractérisé en ce**
**que** le signal de mesure (MS, gMS) s'approche, pendant le temps de balayage, de la courbe exponentielle de l'amplitude de l'impulsion de salve, en particulier de telle manière que la valeur du signal de mesure (MS, gMS)
● ne corresponde qu'à la fin du temps de balayage essentiellement à la valeur de l'amplitude de l'impulsion de salve ou
● ne soit située qu'à la fin du temps de balayage légèrement en dessous de l'amplitude de l'impulsion de salve.

5. Procédé de mesure de distance selon l'une des revendications précédentes,
**caractérisé en ce**
**que** le signal de mesure (MS,gMS) est filtré avant l'évaluation avec un filtre passe-bande (8) qui laisse passer essentiellement seulement les fréquences autour de la fréquence de la courbe enveloppe NF.

6. Procédé de mesure de distance selon l'une des revendications précédentes, **caractérisé en ce que**
● le rayonnement de mesure (21) est modulé pendant le temps de salve active (t_{Burst-on}) avec une fréquence de modulation supérieure à 100 MHz et
● la superposition avec la fréquence de mélangeur se fait de telle manière que la fréquence de la courbe enveloppe NF se situe dans la plage entre 0,5 et 500 kHz.

7. Procédé de mesure de distance selon l'une des revendications précédentes, **caractérisé en ce que**
la durée de période de salve (t_{Burst}) et la fréquence de la courbe enveloppe NF sont choisies de telle manière que la durée de période de la courbe enveloppe NF est de seize fois la durée de période de salve (t_{Burst})

8. Procédé de mesure de distance selon l'une des revendications précédentes, **caractérisé en ce que**
qu'il est obtenu un duty cycle, qui est défini par le rapport du temps de salve active (t_{Burst-on}) et de la durée de période de salve (t_{Burst}), d'environ 5 % à environ 50 %, en particulier d'environ 10 % à environ 40 %.

9. Procédé de mesure de distance selon l'une des revendications précédentes, **caractérisé en ce que**
l'évaluation du signal de mesure (MS,gMS) pour ce qui est d'une relation de phase se fait par rapport à un signal de référence qui est généré à partir de la détection et de la conversion d'une part (22) du rayonnement de mesure guidée par un parcours de référence connu.

10. Circuit de réception (2) pour un dispositif de mesure de distance optoélectronique (1) avec
● un récepteur (5) pour la conversion d'au moins une partie (23) de rayonnement de mesure optique (21) réfléchi sur un objet de mesure (33), modulé d'après le principe de modulation de salves - avec une durée de période de salve (t_{Burst}) obtenue à partir d'un temps de salve active (t_{Burst-on}) et d'un temps mort (t_{Burst-off}) - en un signal de mesure d'entrée électrique (ES), le circuit de réception (2) étant configuré pour la production d'un signal de mesure (MS, gMS) approprié pour l'évaluation selon le principe de mesure de phase à partir du signal de mesure d'entrée (ES),
**caractérisé par**
● des moyens (6) pour l'application en particulier continue d'une tension de mélangeur modulée au récepteur (5) si bien que le signal de mesure d'entrée (ES) présente essentiellement des impulsions de salve
□ de largeur constante qui est déterminée par le temps de salve active (t_{Burst-on}) et
□ d'amplitude modulée
et une courbe enveloppant les impulsions de salve a une allure de courbe enveloppe NF (H_{NF}) approximativement de forme sinusoïdale avec une fréquence de courbe enveloppe NF basse fréquence ainsi qu'un
● élément échantillonneur bloqueur (10) avec
□ un temps de balayage enchaîné avec le temps de salve active (t_{Burst-on}) et
□ un temps de blocage enchaîné avec le temps mort (t_{Burst-off})

11. Circuit de réception (2) selon la revendication 10,
**caractérisé par**
un filtre passe-bande (8) situé en aval de l'élément échantillonneur bloqueur (10) avec des fréquences de passage dans une plage autour de la fréquence de courbe enveloppe NF.

12. Circuit de réception (2) selon la revendication 10 ou 11,
**caractérisé en ce que**
le circuit de réception (2) présente un amplificateur de transimpédance (8) mis en circuit entre le récepteur (5) et l'élément échantillonneur bloqueur (10), amplificateur qui est configuré pour un filtrage passe-bas si bien que des composantes de fréquence du signal de mesure d'entrée (ES) sont bloquées dans la plage de fréquence autour d'une fréquence de modulation avec laquelle le rayonnement de mesure (21) est modulé pendant le temps de salve active.

13. Circuit de réception (2) selon l'une des revendications 10 à 12,
**caractérisé en ce**
**qu'**un temps de réglage de l'élément échantillonneur bloqueur (10) est choisi à peu près égal ou un peu plus long que le temps de balayage.

14. Circuit de réception (2) selon l'une des revendications 10 à 13,
**caractérisé en ce**
**que** l'élément échantillonneur bloqueur (10) présente au moins
● un commutateur (12) pour fixer le temps de balayage et de blocage,
● un condensateur (11) pour le maintien constant d'une valeur de signal pendant le temps de blocage et
● une résistance de charge (13) pour le dimensionnement de l'élément échantillonneur bloqueur (10) entre autres pour ce qui est d'un temps de réglage.

15. Circuit de réception (2) selon l'une des revendications 10 à 14,
**caractérisé en ce que**
l'élément échantillonneur bloqueur (10) est configuré pour le balayage du signal de mesure d'entrée (ES) généré par superposition avec la fréquence de mélangeur, signal qui est enveloppé par la courbe enveloppe (H_{NF}) basse fréquence par rapport à la fréquence de modulation du rayonnement de mesure (21).

16. Dispositif de mesure de distance optoélectronique (1) configuré en particulier comme appareil à main avec
● un émetteur (3) pour l'émission de rayonnement de mesure optique (21) modulé d'après le principe de modulation de salves - avec une durée de période de salve (t_{Burst}) obtenue à partir d'un temps de salve active (t_{Burst-on}) et d'un temps mort (t_{Burst-off}) - en direction d'un objet de mesure (33),
● un circuit de réception (2) selon l'une des revendications 10 à 15 et
● une installation de traitement de signal (4) pour déterminer une distance par évaluation du signal de mesure (MS, gMS) selon le principe de mesure de phase, un trajet de référence étant prévu pour guider une part (22) du rayonnement de mesure le long d'un parcours de référence connu sur un récepteur de référence configuré pour générer un signal de référence et l'installation de traitement de signal (4) évaluant le signal de mesure (MS, gMS) pour ce qui est d'une relation de phase par rapport au signal de référence.
